# EUROPÄISCHE PATENTANMELDUNG

(11) **EP 4 686 546 A1**
(43) Veröffentlichungstag der Anmeldung: **04.02.2026**
(21) Anmeldenummer: 25185126.7
(22) Anmeldetag: 25.06.2025
(51) Int. Cl.: B29C 48/505, B29C 48/25, B29C 48/40

(54) **EXTRUDERSCHNECKE**

(30) Priorität: 01.08.2024 DE 102024121963
(71) Anmelder: Leistritz Extrusionstechnik GmbH, 90459 Nürnberg (DE)
(72) Erfinder: RECHTER, Herr Frank, 97215 Uffenheim OT Welbhausen (DE)
(74) Vertreter: Lindner Blaumeier Patent- und Rechtsanwälte

(57) **Zusammenfassung**

Die Erfindung betrifft eine Extruderschnecke bestehend aus einer Schneckenwelle (1) und mehreren auf dieser lösbar aufsteckbaren oder aufgesteckten Schneckenelementen (18), wobei jedes Schneckenelement (18) eine definierte axiale Mindestlänge (I) oder eine Länge, die einem Vielfachen der Mindestlänge (I) entspricht, aufweist, wobei die Schneckenwelle (1) eine Außenverzahnung (6) und die Schneckenelemente (18) eine in diese eingreifende Innenverzahnung (9) aufweisen, wobei die Außenverzahnung (6) unter Ausbildung einzelner, um den Umfang laufender Zahnkränze (3) über ihre axial Länge versetzt mehrere um den Umfang laufende Vertiefungen (4), die voneinander um die Mindestlänge (a) beabstandet sind, aufweist, derart, dass sich die Innenverzahnung (9) jedes Schneckenelements (18) an beiden axialen Enden bis in den Bereich der Vertiefung (4) erstreckt und die Enden der Innenverzahnung nicht in Eingriff mit der Außenverzahnung (6) sind.

## Beschreibung

Die Erfindung betrifft eine Extruderschnecke bestehend aus einer Schneckenwelle und mehreren auf dieser lösbar aufsteckbaren oder aufgesteckten Schneckenelementen, wobei jedes Schneckenelement eine definierte axiale Mindestlänge oder eine Länge, die einem Vielfachen der Mindestlänge entspricht, aufweist, wobei die Schneckenwelle eine Außenverzahnung und die Schneckenelemente eine in diese eingreifende Innenverzahnung aufweisen.

Derartige, auch als Steckschnecken bezeichnete, Extruderschnecken sind bekannt und ermöglichen einen variablen Aufbau einer Extruderschnecke, indem je nach Anforderung unterschiedliche Schneckenelemente, seien es Förder-, Knet- oder Mischelemente, in verschiedener Reihung auf der Schneckenwelle angeordnet werden können. Um einerseits das Aufstecken, andererseits den im Betrieb erforderlichen Drehmomentübertrag von der Schneckenwelle, in die über einen Extrudermotor das Drehmoment eingeleitet wird, auf die Schneckenelemente zu ermöglichen, ist eine Welle-Nabe-Verzahnung zwischen der Schneckenwelle und den Schneckenelementen vorgesehen, das heißt, die Schneckenwelle weist eine Außenverzahnung auf, während die als Nabe fungierenden Schneckenelemente an der Innenseite ihrer Bohrung eine Innenverzahnung aufweisen, wobei beide Verzahnungen miteinander kämmen. Üblicherweise kommen bei Extruderschnecken Welle-Naben-Verbindungen gemäß den Normen DIN 5480, DIN 5464 oder ISO 4156 in Form einer Evolventenverzahnung zum Einsatz. Diese formschlüssige, symmetrische Verzahnung ermöglicht einen beachtlichen Drehmomentübertrag bei gleichzeitiger einfacher Montier- und Demontierbarkeit der Schneckenelemente.

Aufgrund des hohen übertragenen Drehmoments ist die Verzahnung einer hohen Belastung ausgesetzt, aus der insbesondere im Fall einer Überlast eine plastische Verformung der Verzahnung resultieren kann, was ungewünscht ist Insbesondere werden hierbei die Nabenkanten beeinträchtigt werden, da dort aufgrund des Steifigkeitssprung innerhalb der Verbindung hohe Spannungsspitzen auftreten. Diese Spannungsspitzen können an beiden Flanken der Nabenverzahnung auftreten, resultierend aus unterschiedlichen Verdrehsteifigkeiten zwischen der Schneckenwelle und dem einzelnen Schneckenelement. Dieser Steifigkeitsunterschied hat zur Folge, dass sowohl die vorderseitige als auch die rückseitige Flanke der Nabenverzahnung an der Wellenverzahnung anliegt. Man versucht dem zu begegnen, indem die Flanken der Innenverzahnung der Nabe axial beidseits mit einer Fase versehen werden, was aber sehr aufwendig ist, da dies im Rahmen einer separaten Nachbearbeitung erfolgen muss. Üblicherweise wird die Innenverzahnung eines Schneckenelements geräumt, wobei das Räumverfahren nur die Ausbildung axial geradlinig verlaufender Flanken erlaubt.

Der Erfindung liegt das Problem zugrunde, eine verbesserte Extruderschnecke anzugeben.

Zur Lösung des Problems ist bei einer Extruderschnecke der eingangs genannten Art erfindungsgemäß vorgesehen, dass die Außenverzahnung unter Ausbildung einzelner, um den Umfang laufender Zahnkränze über ihre axial Länge versetzt mehrere um den Umfang laufende Vertiefungen, die voneinander um die Mindestlänge beabstandet sind, aufweist, derart, dass sich die Innenverzahnung jedes Schneckenelements an beiden axialen Enden bis in den Bereich der Vertiefung erstreckt und die Enden der Innenverzahnung nicht in Eingriff mit der Außenverzahnung sind.

Erfindungsgemäß wird die Extruderschnecke mit einer Vielzahl separater, um den Umfang laufender Vertiefungen ausgebildet, sodass sich eine entsprechende Anzahl an separaten, um den Umfang laufender Zahnkränze, die sich aus entsprechenden einzelnen Zähnen bzw. Außenverzahnungsabschnitten gebildet sind, ergibt. Die Vertiefungen und die Zahnkränze sind, axial gesehen, einander abwechselnd ausgebildet, wobei die axiale Beabstandung gemäß einem vorgegebenen Raster definiert ist. Die Vertiefungen sind um eine Mindestlänge beabstandet, d.h., dass die axialen Mitten der, gesehen senkrecht zur Wellenlängsachse symmetrischen, Vertiefungen alle um die Mindestlänge vonbeinander beabstandet sind. Diese Mindestlänge entspricht der axialen Mindestlänge eines auf die Extruderwelle aufschiebbaren Schneckenelement. Wie ausgeführt weisen die Schneckenelemente entweder axial gesehen nur die Mindestlänge auf, oder ein Vielfaches dieser Mindestlänge, also z.B. die zweifache oder dreifache Mindestlänge. Die Vertiefungen und demzufolge auch gleichbedeutend die Zahnkränze sind um eben dieses Mindestlängen-Raster axial voneinander beabstandet längs der Schneckenwelle ausgebildet. Beträgt beispielsweise die Mindestlänge 30 mm, so sind die Vertiefungen symmetrisch mit diesem 30 mm-Raster längs der Schneckenwelle ausgebildet. Dies bedeutet aber auch, dass die Länge eines jeden Zahnkranz es, also die axiale Länge der innerhalb des Zahnkranzes liegenden Zähne bzw. Außenverzahnungsabschnitte bzw. deren Flanken, kürzer ist als das definierte Raster, also beispielsweise das 30 mm-Raster. Dies hat zur Folge, dass jedes auf die Schneckenwelle geschobene Schneckenelement zwar mit seiner Innenverzahnung mit der Außenverzahnung eines Zahnkranzes (bzw. bei Schneckenwelle mit einer zweifachen oder dreifachen Mindestlänge mit mehreren Zahnkränzen) kämmt, jedoch an den beiden axialen Enden der Innenverzahnung kein Eingriff mit der Außenverzahnung gegeben ist, da diese axialen Enden im Bereich einer Vertiefung liegen. Der Verzahnungseingriff findet also nicht über die gesamte Länge der Innenverzahnung eines Schneckenelements statt, sondern nur abschnittsweise, definiert über die Länge der tragenden Außenverzahnung innerhalb des einzelnen Zahnkranzes.

Dieser von der jeweiligen Stirnkante axial versetzt erfolgende Verzahnungseingriff bewirkt vorteilhaft, dass die eigentliche Drehmomenteinleitung von der Schneckenwelle in das Schneckenelement erst mit einem gewissen Abstand zu Nabekante stattfindet. Das Drehmoment wird somit erst quasi im "Elementinneren" eingeleitet, was dazu führt, dass im Bereich der Stirnkanten, also an den Enden der Innenverzahnung, etwaige Spannungsspitzen reduziert werden können. Die Belastung an den Verzahnungsenden kann folglich verringert werden, was wiederum ermöglicht, insgesamt die Drehmomentübertragung zu steigern, resultierend aus der quasi "sanfteren", lokal begrenzten Drehmomenteinleitung, da an den Nabenenden keine Spannungsüberhöhung in Verbindung mit einer plastischen Verformung zu besorgen ist.

Jede Vertiefung nimmt demzufolge das jeweilige Ende der Innenverzahnung eines Schneckenelements an der Nabekante aus dem Verzahnungseingriff. Da die Zähne der Innenverzahnung eine entsprechende radiale Länge aufweisen, sodass sie sich tief in die Nut zwischen zwei Zähnen der Außenverzahnung erstrecken, ist es zweckmäßig, wenn sich die Vertiefung maximal bis auf den Kern der Schneckenwelle erstreckt. Hierüber wird sichergestellt, dass die Enden der Innenverzahnung definitiv nicht in Eingriff mit der Außenverzahnung stehen können, auch im Falle etwaiger Torsionen oder sonstiger lastbedingter Geometrieänderungen.

Hinsichtlich der Ausbildung einer jeden Vertiefung sind verschiedene Möglichkeiten denkbar. Die Vertiefung kann beispielsweise einen einfachen Freistich aufweisen bzw. hierüber gebildet sein, über den die Außenverzahnung in die Zahnkränze unterteilt wird. Dieser Freistich kann aber auch nur einen Abschnitt der Vertiefung bilden, d. h., dass die Vertiefung einen über den Freistich gebildeten Vertiefungsabschnitt aufweist, der, axial gesehen, beispielsweise mittig in der gebildeten Vertiefung vorgesehen ist. Der Freistich hat beispielsweise eine Länge von 2-5 mm und kann beispielsweise bis auf den Kern der Schneckenwelle laufen.

Besonders vorteilhaft ist es, wenn die Außenverzahnung zwischen zwei Vertiefungen einen mittigen Verzahnungsabschnitt mit einer Maximalhöhe aufweist, an den sich in beiden axialen Richtungen ein seitlicher Verzahnungsabschnitt, in dem sich die Höhe unter Bildung der Vertiefung reduziert, anschließt. Die Vertiefung wird demgemäß nicht abrupt beispielsweise über einen Freistich mit einer entsprechenden scharfen Zahnkranzkante gebildet, sondern über eine sich allmählich verringernde Zahnhöhe der Außenverzahnung. Die Außenverzahnung weist einen mittigen Verzahnungsabschnitt auf, in dem ein, radial gesehen, maximale Verzahnungseingriff zur Innenverzahnung gegeben ist. Zu beiden axialen Seiten dieses mittigen Verzahnungsabschnitt nimmt die Höhe der Außenverzahnung sodann ab, sodass sich einerseits die Eingriffshöhe zur Innenverzahnung reduziert, und andererseits am Ende dieser Verjüngung der Außenverzahnungshöhe die Innenverzahnung nicht mehr in Eingriff mit der Außenverzahnung steht.

Dabei kann die Höhe linear abnehmen, also die Außenverzahnung nach Art einer Rampe in ihrer Höhe abfallen. Sie kann also beispielsweise über eine schräge Rampe mit konstantem Winkel von der maximalen Verzahnungshöhe auf die minimale Verzahnungshöhe, beispielsweise auf den Kern der Welle, abfallen, oder in einen Freistich laufen. Anstelle einer solchen linear Höhenabnahme ist es auch denkbar, dass die Zahnhöhe beispielsweise konvex abnimmt, also mit einer leichten Wölbung nach außen reduziert wird, oder wellenförmig abnimmt, also einen konvexen und einen anschließenden konkaven Abschnitt aufweist, der dann beispielsweise flach in den Freistich ausläuft und ähnliches. Es sind also unterschiedliche Zahn- und damit Zahnkranzgeometrien denkbar, über die die Höhe der Außenverzahnung zur Bildung der Vertiefung reduziert werden kann.

Wie bereits beschrieben, kommt es im Betrieb aufgrund des zu übertragenden, hohen Drehmoments zu einer gewissen elastischen Torsion der Welle über ihre Länge, die dazu führt, dass sowohl die vordere als auch die hintere Flanke eines jeden Zahns der Innenverzahnung mit der Außenverzahnung in Kontakt kommt. Um im Bereich der Vertiefung, wo über eine gewisse Länge wie beschrieben nach wie vor ein Verzahnungskontakt zur Innenverzahnung gegeben ist, eine bestmögliche Anlage der Innenverzahnung an die Außenverzahnung zu ermöglichen, sieht eine zweckmäßige Weiterbildung der Erfindung vor, dass die seitlichen Verzahnungsabschnitte an einer Seite oder an beiden Seiten gerundete oder geschrägte Zahnflanken aufweisen. D. h., dass die Außenverzahnungsabschnitte innerhalb des jeweiligen Zahnkranzes ein- oder beidseitig, gesehen Umfangsrichtung, leicht abgerundet oder angeschrägt sind, sodass es trotz einer gewissen Torsion der Welle zu einer sehr guten Anlage der Innenverzahnung ohne übermäßige Spannungsspitzen kommt. Es wird folglich eine Endrücknahme an den Zähnen der Außenverzahnung vorgesehen. Dadurch, dass sowohl die treibende als auch die rückwärtige Flanke über eine Abrundung oder Schräge verfügt, kann das Potenzial der Drehmomentübertragung noch weiter gesteigert werden.

Dabei ist es besonders zweckmäßig, wenn die Rundung oder die Schräge der Zahnflanken entsprechend einem zu erwartenden Torsionswinkel der Schneckenwelle im Betrieb ausgebildet ist. Das heißt, dass die Rundungen oder Schrägen an der vorderen und hinteren Zahnflanken nicht symmetrisch sind, sondern quasi asymmetrisch unter Berücksichtigung eines sich im Betrieb erwartungsgemäß einstellenden Torsionswinkels, der, lokal über die Länge eines solchen Zahnkranzes gesehen, nur wenige Sekunden bis Minuten beträgt, ausgelegt ist. Dies erlaubt es, dass sich die Innenverzahnung des Schneckenelements bestmöglich an die sich in ihrer Geometrie torsionsbedingt etwas ändernde Außenverzahnung bei einer Torsionsbelastung anlegt.

Wie bereits beschrieben, kann jede Vertiefung auch einen Vertiefungsabschnitt in Form eines Freistichs aufweisen. Ist ein solcher Freistich vorgesehen, so verlaufen die Vertiefungsabschnitte, die innerhalb eines jeden Zahnkranzes durch die beidseitige Reduzierung der Zahnhöhe gebildet sind, in den Freistich aus, münden also in diesem, wobei der Freistich beispielsweise, wie beschrieben, auf den Kern der Schneckenwelle durchgreift.

Eine zweckmäßige Weiterbildung der Erfindung sieht vor, dass sich die Höhe der Innenverzahnung an beiden axialen Enden reduziert. Demgemäß ist also auch die Innenverzahnung, lediglich nur unmittelbar im Bereich der beiden axialen Verzahnungsenden, also im Übergang zur Nabenkante, in der Höhe reduziert. Hierüber wird mit Vorteil vermieden, dass im Falle einer etwaigen, wenngleich minimalen Verkippung eines Schneckenelements keine Eindrückungen in die Schneckenwelle über die Innenverzahnung erfolgen, da die Innenverzahnung an den axialen Enden keine scharfe Verzahnungskante aufweist. Bevorzugt wird die Höhe über eine Rundung reduziert, denkbar wäre aber auch eine Fase, wobei sowohl die Rundung als auch die Fase axial gesehen möglichst kurz sein sollten, da sie lediglich der Vermeidung von Eindrückungen dienen.

Die Außenverzahnung und die Innenverzahnung sind erfindungsgemäß bevorzugt symmetrische Verzahnungen, weisen also beidseits jeweils einen gleichen Flankenwinkel bzw. eine gleiche Flankengeometrien auf. Die Verzahnung kann beispielsweise auf Basis der DIN5480 ausgeführt sein, einer weit verbreiteten Verzahnung Geometrie im Bereich der Extruderschnecken. Denkbar sind aber auch beispielsweise trochoidische Verzahnungen, wie grundsätzlich jede symmetrische Verzahnung verwendet werden kann.

Bevorzugt sind die Zahnkränze sowie die Verzahnungen spanlos hergestellt. Die Außenverzahnung respektive die Zahnkränze werden also nicht über ein Räumwerkzeug oder ein Fräswerkzeug und ähnliches spannend ausgearbeitet, sondern werden spanlos beispielsweise durch Rollen hergestellt. Hierzu kann ein entsprechen des Profilrollwerkzeug verwendet werden, das eine Abbildungsgeometrie aufweist, die zur Ausbildung eines Zahnkranzes und der beidseits benachbarten Vertiefungsabschnitte durch Rollen in die kaltumformbare Schneckenwelle eingerollt wird. Ein solches Werkzeug kann beispielsweise einen Zahnkranz sowie zu beiden Seiten axial die entsprechenden Vertiefungsabschnitte ausbilden, sodass zur Herstellung einer Schneckenwelle mit einer entsprechenden Zahnkranzanzahl die Schneckenwelle sukzessive um die entsprechende Anzahl axial relativ zum positionsfesten Werkzeug versetzt wird, dass also schrittweise einen Zahnkranz mit zugeordneter Vertiefung nacheinander eingerollt. Natürlich kann alternativ auch das Werkzeug axial versetzt werden.

Neben der Extruderschnecke selbst betrifft die Erfindung ferner einen Extruder umfassend eine oder mehrere Extruderschnecken der vorstehend beschriebenen Art.

Bei Einsatz von zwei oder mehr Extruderschnecken können diese bevorzugt gleichsinnig drehen, aber auch eine gegensinnige Drehung ist denkbar.

Weiterhin betrifft die Erfindung ein Verfahren zur Herstellung einer Schneckenwelle für eine Extruderschnecke der vorstehend beschriebenen Art. Dieses Verfahren zeichnet sich dadurch aus, dass an einem Wellenkörper mittels eines Profilrollwerkzeugs die Außenverzahnung spanlos gerollt wird, wobei die Zahnkränze sowie die zugehörigen Vertiefungsabschnitte nacheinander durch axiales Versetzen des Wellenkörpers relativ zum Profilrollwerkzeug hergestellt werden. Das Verfahren sieht also ein spanloses Rollen des Wellenkörpers mittels des Profilrollwerkzeugs vor. Während natürlich die Möglichkeit besteht, nur einen Zahnkranz mit beidseitigen Vertiefungsabschnitte pro Axialposition mit dem Profilrollwerkzeug auszubilden, ist es natürlich auch denkbar, bei entsprechend längerer Ausgestaltung des Profilrollwerkzeugs zwei oder mehr Zahnkränze mit den entsprechenden Vertiefungsabschnitte etc. an einer Axialposition der Werkstückbearbeitung auszubilden.

Der Wellenkörper selbst besteht bevorzugt aus einem kaltumformbaren Werkstoff, der nach dem Ausbilden der Zahnkränze zur Härtung thermisch behandelt wird. Die Behandlung erfolgt bevorzugt durch ein Auslagern, wodurch eine beachtliche Festigkeitssteigerung erreicht wird, die zu Übertragung der hohen Drehmomente erforderlich ist. Bei dem Werkstoff handelt es sich also um einen ausscheidungshärtbaren Stahl, der korrosionsbeständig ist und, weil nur lösungsgeglüht, einerseits kaltumformbar ist, und andererseits durch Auslagern bei einer moderaten Auslagerungstemperatur im Bereich von 400-600 °C gehärtet werden kann, wobei die Härte nach dem Auslagern beispielsweise zwischen 40-55 HRC liegen sollte.

Weitere Vorteile und Einzelheiten der vorliegenden Erfindung ergeben sich aus den im folgenden beschriebenen Ausführungsbeispielen sowie anhand der Zeichnung. Dabei zeigen:
- Figur 1: eine Prinzipdarstellung einer Schneckenwelle einer erfindungsgemäßen Extruderschnecke,
- Figur 2: eine Prinzipdarstellung einer erfindungsgemäßen Extruderschnecke mit einer Schneckenwelle gemäß Figur 1,
- Figur 3: eine vergrößerte Teilansicht der Schneckenwelle aus Figur 1 unter Darstellung eines Zahnkranzes mit zugeordneten Vertiefungen,
- Figur 4: eine vergrößerte Teilansicht der erfindungsgemäßen Extruderschnecke unter Darstellung der in ihrer Höhe reduzierten Innenverzahnung, und
- Figur 5: eine Prinzipdarstellung einer erfindungsgemäßen Extruderschnecke einer zweiten Ausführungsform.

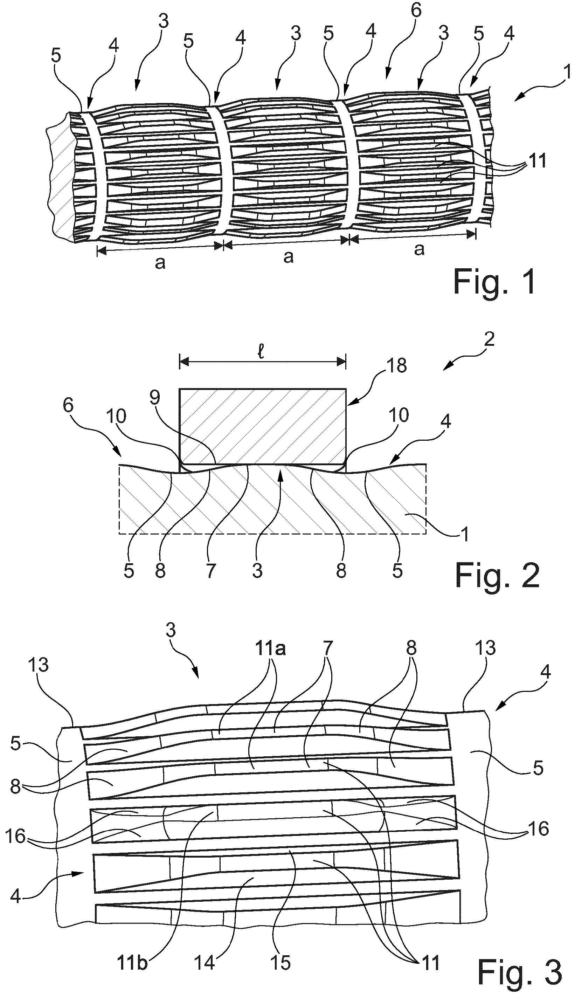

Figur 1 zeigt eine Schneckenwelle 1, die für eine erfindungsgemäß Extruderschnecke 2, wie in Figur 2 gezeigt, ausgerüstet ist. Die Schneckenwelle 1 weist über ihre Länge verteilt mehrere in einem definierten Abstandsraster a voneinander axial beabstandete Zahnkränze 3 auf, wobei zwischen jedem Zahnkranz 3 eine Vertiefung 4 vorgesehen ist, die sich bis in den jeweiligen Zahnkranz 3 erstreckt. Jeder Zahnkranz 3 besteht aus einer Vielzahl einzelner Zähne 11, die in Umfangsrichtung den Zahnkranz bilden. Wie bereits Figur 1 zeigt, verringert sich die Höhe der jeweiligen Zähne 11 zu ihren beiden axialen Enden hin, was nachfolgend noch im Detail bezüglich Figur 3 beschrieben wird. In jedem Fall wird über diese Höhenverringerung in Verbindung mit einem zwischen den Zahnkränzen 3 befindlichen Freistich 5 die jeweilige Vertiefung 4 gebildet. Infolge des definierten Rasters a, das exakt einer axialen Mindestlänge eines Schneckenelements, das auf die Schneckenwelle 1 aufgeschoben wird, entspricht, ist eine definierte Verzahnungsgeometrie seitens der Außenverzahnung 6 gegeben, wobei die Außenverzahnung 6, axial gesehen, über die Vielzahl der einzelnen Zahnkränze 3 gebildet ist.

Figur 2 zeigt eine Prinzipdarstellung einer erfindungsgemäßen Extruderschnecke 2, bestehend aus der Schneckenwelle 1 sowie im gezeigten Beispiel einem aufgeschobenen Schneckenelement 18, wobei an der fertig konfigurierten Extruderschnecke natürlich eine Vielzahl solcher Schneckenelemente 18 vorgesehen ist.

Die Schnittansicht zeigt die Außenverzahnung 6 respektive einen Zahnkranz 3, der ersichtlich einen mittigen Verzahnungsabschnitt 7 aufweist, in dem die Zahnhöhe konstant ist, wobei beidseits an diesem mittigen Verzahnungsabschnitt zwei seitliche Verzahnungsabschnitte 8 anschließen, an denen, wie Figur 2 zeigt, die Zahnhöhe unter Ausbildung der Vertiefung 4 abnimmt. Die in ihrer Höhe im Beispiel rampenartig, also linear abnehmenden Verzahnungsabschnitte 8 laufen in den Freistich 5 aus, wie Figur 2 anschaulich zeigt.

Das Schneckenelement 18 - dies gilt natürlich für jedes Schneckenelement 18, das auf die Schneckenwelle 1 aufgeschoben wird - weist eine Innenverzahnung 9 auf, die mit der Außenverzahnung 6 kämmt. Die Innenverzahnung 9 erstreckt sich von der eine Nabenkante 10 zu anderen Nabenkante 10, also nahezu über die gesamte axiale Länge des Schneckenelements 18. Das hier gezeigte Schneckenelement 18 weist die Mindestlänge l auf, d. h., dass die Innenverzahnung 9 entweder dieser Mindestlänge l entspricht, oder, worauf nachfolgend noch ausgegangen wird, an den beiden Nabenkanten 10 geringfügig in ihrer Höhe reduziert ist.

In jedem Fall zeigt Figur 2 anschaulich, dass die Innenverzahnung 9 nur im Bereich des mittigen Verzahnungsabschnitts 7 vollständig mit dem Zahnkranz 3 respektive den Zähnen 11 in Eingriff steht. Die Eingriffshöhe verringert sich in den seitlichen Verzahnungsabschnitten 8, da diese in ihrer Höhe reduziert sind. Wie Figur 2 zeigt, sind die beiden axialen Enden der Innenverzahnung 9, also die Verzahnungsabschnitte der Innenverzahnung 9 im Bereich der Nabenkanten 10, nicht mehr in Eingriff mit der Außenverzahnung 6 respektive dem Zahnkranz 3, sondern liegen nicht-tragend in der Vertiefung 4 und vorliegend im Bereich des jeweiligen Freistichs 5. Der Drehmomentübertrag erfolgt also nicht an den Nabenkanten 10, da dort keine drehmomentübertragende Verzahnungsverbindung gegeben ist. Vielmehr nimmt die Verzahnung mit zunehmender ansteigender Höhe der Außenverzahnung im Bereich der seitlichen Verzahnungsabschnitte 8 sukzessive zu, bis die maximale Verzahnung zwischen Innenverzahnung 9 und Außenverzahnung 6 im Bereich der mittleren Verzahnungsabschnitte 7 gegeben ist. Dort erfolgt der maximale Drehmomentübertrag. Dadurch, dass die Nabenkanten 10 aus der Drehmomentübertragung genommen sind, können dort keine Spannungsspitzen auftreten, die bei zu hoher Last in einer plastischen Verformung der Innenverzahnung im Bereich der Nabenkanten 10 führen können.

Die Zahnkränze 3 mit den Vertiefungen 4 sind, wie ausgeführt, in einem definierten Raster a angeordnet und axial voneinander beabstandete. Dieses Raster a entspricht exakt der Mindestlänge l eines Schneckenelements 18. Hierüber wird sichergestellt, dass jedes aufgeschobene Schneckenelement 18, sei es, dass dieses nur die Mindestlänge l aufweist, oder ein Vielfaches n der Mindestlänge l (Gesamtlänge = n · l), mit den jeweiligen Nabenkanten 10 stets im Bereich einer Vertiefung 4 aufgenommen ist, und demzufolge nicht im Bereich der Nabenkanten 10 in Verzahnungseingriff mit der Außenverzahnung steht.

Figur 3 zeigt eine vergrößerte Teilansicht eines Zahnkranzes 3. Dieser besteht aus einer Vielzahl einzelner Zähne 11, wobei jede Zahn 11 einen mittigen Verzahnungsabschnitt 7 aufweist, in dem der jeweilige Zahn 11 die maximale Verzahnungshöhe aufweist, während sich zu beiden Seiten des mittigen Verzahnungsabschnitts 7 zwei seitliche Verzahnungsabschnitte 8 anschließen, in denen die Verzahnungshöhe abnimmt, bis auf den Kern 13 der Schneckenwelle 6, auf welchen sich der Freistich 5 der jeweiligen Vertiefung 4 erstreckt. Die seitlichen Verzahnungsabschnitte 8 verlaufen rampenförmig, nehmen in ihrer Höhe also linear von der Maximalhöhe im Verzahnungsabschnitt 7 ausgehend ab und laufen in den jeweiligen Freistich 5 aus. Anstelle einer linear abnehmenden Rampenform wäre aber auch eine konvexe oder wellenförmige Geometrie denkbar. Ersichtlich variiert damit auch die Fläche der jeweiligen vorderen Zahnflanken 14 sowie der hinteren Zahnflanken 15, wie in Figur 3 gezeigt, sodass sich zwangsläufig die Kontaktfläche zwischen Außenverzahnung 6 und Innenverzahnung 9 entsprechend darstellt, diese nimmt, lokal gesehen, sukzessive bis in den mittigen Verzahnungsabschnitt 7 zu.

Figur 3 zeigt exemplarisch Zähne 11a, bei denen die Zahnflanken 14, 15 bis zu dem Auslauf in den Freistich 5 ebenflächige sind. Daneben ist nur zu Darstellungszwecken exemplarisch auch ein Zahn 11b gezeigt, bei dem die beiden Zahnflanken 14, 15 an ihren Enden, also im Bereich der seitlichen Verzahnungsabschnitte 8, Rundungen 16 aufweisen, also nicht ebenflächig sind. Hierüber kann der Bereich, in dem sukzessive eine Zunahme der Anlagefläche zwischen der Innenverzahnung 9 und dem jeweiligen Zahn 11b gegeben ist, zusätzlich optimiert werden, also ein sanftes Anlegen im Falle einer Drehmomentübertragung erwirkt werden. Dies gilt insbesondere, wenn die Bereiche mit den Rundungen 16 unter Berücksichtigung eines sich im unter Last ergebenden Torsionswinkels, also einer Verdrehung der Schneckenwelle 1 um Ihre Längsachse ausgelegt sind. Die Rundungen 16 sind also an der vorderen und hinteren Flanke 14,15 nicht symmetrisch, sondern asymmetrisch, da die einzelnen Zähne 11b minimal entsprechen dem Torsionswinkel gewinkelt verlaufen, also minimal schräg zur Längsachse verlaufen. Die Ausgestaltung der Rundungen 16 (statt Rundungen können auch ebene Schrägen vorgesehen sein) kann diesen Torsionswinkel aufnehmen, sodass sich unter Last eine optimale Anlage zwischen der Innenverzahnung 9 und dem jeweiligen Zahnkranz 3 bzw. den entsprechend ausgelegten Zähne 11b ergibt. Natürlich sind entweder nur Zähne 11a unter Bildung eines Zahnkranzes 3 vorgesehen, oder nur Zähne 11b, nicht aber entsprechende Mischformen.

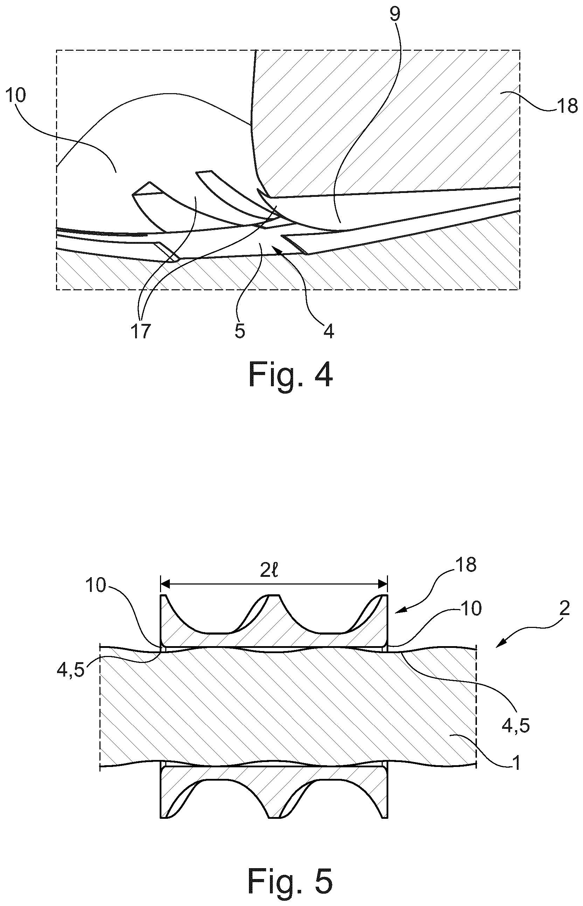

Figur 4 zeigt eine vergrößerte Teilansicht des Bereichs den Nabenkante 10 eines Schneckenelements 18. Gezeigt ist die Innenverzahnung 9, die ersichtlich im Bereich der Nabenkante 10 in ihrer Höhe reduziert ist, wobei hierzu entsprechende Rundungen 17 (statt einer Rundung kann auch eine Fase vorgesehen sein) an den axialen Enden der Innenverzahnung 9 vorgesehen sind, wobei diese Rundungen 17 natürlich an beiden axialen Enden der Innenverzahnung vorgesehen sind. Wie Figur 4 zeigt, liegen diese axialen Enden bzw. Rundungen 17 im Bereich der jeweiligen Vertiefung 4 bzw. des Freistichs 5. Sollte es unter Last zu einem minimalen Verkippen eines Schneckenelements 7 quer zur Längsachse der Schneckenwelle 2 kommen, wird über diese Rundungen 17 vermieden, dass es hierbei zu einer Einrückung der Nabenkante in die Schneckenwelle kommt.

Figur 5 zeigt schließlich eine Ausgestaltung einer erfindungsgemäßen Extruderschnecke 2, wiederum umfassen eine erfindungsgemäße Schneckenwelle 1 gemäß Figur 1. Das hier gezeigte Schneckenelement 18 weist eine Länge auf, die beispielhaft der zweifachen Mindestlänge l entspricht, wie dargestellt. Ersichtlich liegen auch bei diesem doppelt langen Schneckenelement 18 die Nabenkanten 10 und die in deren Bereich befindlichen axialen Enden der Innenverzahnung 9 im Bereich der Vertiefung 4 respektive des Freistichs 5, sodass auch bei einem solchen doppelt langen Schneckenelements 7 die Innenverzahnung im Bereich der Nabenkanten 10 aus der Drehmomentübertragung genommen sind. Gleiches gilt auch für noch längere Schneckenelemente 18, die jeweils ein Vielfaches der Mindestlänge l bemessen.

Um sicherzustellen, dass jedes Schneckenelement 7 an einer definierten Axialposition angeordnet wird, ist natürlich an der Schneckenwelle 1 ein entsprechender Anschlag vorgesehen, gegen den das erste Schneckenelement läuft. Über diesen Anschlag ist es exakt bezüglich des Rasters a positioniert, sodass jedes folgende Schneckenelement ebenfalls exakt bezüglich des Rasters a positioniert ist und sichergestellt ist, dass jeden Nabenkante 10 und mit ihr das jeweilige Ende der Innenverzahnung 9 im Bereich einer Vertiefung 4 bzw. eines Freistich 5 angeordnet ist und damit lastfrei gestellt ist.

Die Ausbildung des Zahnkranzprofils der Schneckenwelle 1 erfolgt bevorzugt durch Rollen unter Verwendung eines Profilrollwerkzeugs, mit dem die entsprechende Kontur der Außenverzahnung 6 respektive die Zahnkränze 3 nebst der Vertiefungen 4 in das metallene Material eines noch unverformten Wellenkörpers eingerollt werden. Als Material der Schneckenwelle 1 wird bevorzugt ein kaltumformbarer Stahl verwendet, der sich im kalten Zustand mit einem Profilrollwerkzeug entsprechend bearbeiten lässt, und der durch eine nachgeschaltete thermische Behandlung, insbesondere einem einfachen Auslagern, zumindest im Bereich der Außenverzahnung 6 entsprechend gehärtet werden kann, sodass sich die geforderten Härtewerte im Bereich der Außenverzahnung 6 ergeben.

## Patentansprüche

1. Extruderschnecke bestehend aus einer Schneckenwelle (1) und mehreren auf dieser lösbar aufsteckbaren oder aufgesteckten Schneckenelementen (18), wobei jedes Schneckenelement (18) eine definierte axiale Mindestlänge (I) oder eine Länge, die einem Vielfachen der Mindestlänge (l) entspricht, aufweist, wobei die Schneckenwelle (1) eine Außenverzahnung (6) und die Schneckenelemente (18) eine in diese eingreifende Innenverzahnung (9) aufweisen, **dadurch gekennzeichnet, dass** die Außenverzahnung (6) unter Ausbildung einzelner, um den Umfang laufender Zahnkränze (3) über ihre axial Länge versetzt mehrere um den Umfang laufende Vertiefungen (4), die voneinander um die Mindestlänge (a) beabstandet sind, aufweist, derart, dass sich die Innenverzahnung (9) jedes Schneckenelements (18) an beiden axialen Enden bis in den Bereich der Vertiefung (4) erstreckt und die Enden der Innenverzahnung nicht in Eingriff mit der Außenverzahnung (6) sind.

2. Extruderschnecke nach Anspruch 1, **dadurch gekennzeichnet, dass** sich die Vertiefung (4) bis auf den Kern der Schneckenwelle (1) erstreckt.

3. Extruderschnecke nach Anspruch 1 oder 2, **dadurch gekennzeichnet, dass** die Vertiefung (4) einen über einen Freistich (5) gebildeten Vertiefungsabschnitt aufweist.

4. Extruderschnecke nach einem der vorangehenden Ansprüche, **dadurch gekennzeichnet, dass** die Außenverzahnung (6) zwischen zwei Vertiefungen (4) einen mittigen Verzahnungsabschnitt (7) mit einer Maximalhöhe aufweist, an den sich in beiden axialen Richtungen ein seitlicher Verzahnungsabschnitt (8), in dem sich die Höhe unter Bildung der Vertiefung (4) reduziert, anschließt.

5. Extruderschnecke nach Anspruch 4, **dadurch gekennzeichnet, dass** die Höhe linear oder konvex oder wellenförmig abnimmt.

6. Extruderschnecke nach Anspruch 4 oder 5, **dadurch gekennzeichnet, dass** die seitlichen Verzahnungsabschnitte (8) an einer Seite oder an beiden Seiten gerundete oder geschrägte Zahnflanken (14, 15) aufweisen.

7. Extruderschnecke nach Anspruch 6, **dadurch gekennzeichnet, dass** die Rundung (16) oder Schräge der Zahnflanken (14, 15) entsprechend einem zu erwartenden Torsionswinkel der Schneckenwelle (1) im Betrieb ausgebildet ist.

8. Extruderschnecke nach Anspruch 3 und einem der Ansprüche 4 bis 7, **dadurch gekennzeichnet, dass** jeweils zwei seitliche Verzahnungsabschnitte (8) in einem Freistich (5) münden.

9. Extruderschnecke nach einem der vorangehenden Ansprüche, **dadurch gekennzeichnet, dass** sich die Höhe der Innenverzahnung (9) an beiden axialen Enden reduziert.

10. Extruderschnecke nach Anspruch 9, **dadurch gekennzeichnet, dass** die Höhe über eine Rundung (17) oder eine Fase reduziert ist.

11. Extruderschnecke nach einem der vorangehenden Ansprüche, **dadurch gekennzeichnet, dass** die Außenverzahnung (6) und die Innenverzahnung (9) symmetrische Verzahnungen sind.

12. Extruderschnecke nach einem der vorangehenden Ansprüche, **dadurch gekennzeichnet, dass** die Außenverzahnung (6) sowie die Vertiefungen (4) spanlos hergestellt sind.

13. Extruder umfassend eine oder mehrere Extruderschnecken (2) nach einem der vorangehenden Ansprüche.

14. Extruder nach Anspruch 13, **dadurch gekennzeichnet, dass** bei Einsatz von zwei oder mehr Extruderschnecken (2) die Extruderschnecken (2) gleichsinnig oder gegensinnig drehen.

15. Verfahren zur Herstellung eines Schneckenwelle für eine Extruderschnecke nach einem der Ansprüche 1 bis 13, **dadurch gekennzeichnet, dass** an einem Wellenkörper mittels eines Profilrollwerkzeugs die Außenverzahnung (6) spanlos gerollt wird, wobei die Zahnkränze (3) sowie die zugehörigen Vertiefungen nacheinander durch axiales Versetzen des Wellenkörpers relativ zum Profilrollwerkzeug hergestellt werden.

16. Verfahren nach Anspruch 15, **dadurch gekennzeichnet, dass** der Wellenkörper aus einem kaltumformbaren Werkstoff besteht, der nach dem Ausbilden der Zahnkränze (3) zur Härtung thermisch behandelt wird.
